# EUROPÄISCHE PATENTSCHRIFT

(11) **EP 0 315 773 B1**
(45) Veröffentlichungstag und Bekanntmachung des Hinweises auf die Patenterteilung: **20.01.1993**
(21) Anmeldenummer: 88116456.0
(22) Anmeldetag: 05.10.1988
(51) Int. Cl.: B60R 1/06

(54) **Aussenspiegel für ein Fahrzeug**
Exterior rear view mirror for a vehicle
Rétroviseur extérieur pour véhicules automobiles

(30) Priorität: 09.10.1987 DE 3734254
(43) Veröffentlichungstag der Anmeldung: 17.05.1989
(73) Patentinhaber: HOHE KG, D-97903 Collenberg (DE)
(72) Erfinder: Seitz, Edwin, D-6985 Neuenbuch (DE)
(74) Vertreter: Zinngrebe, Horst, Dr.rer.nat.

(56) Entgegenhaltungen:
- FR-A- 2 521 083
- GB-A- 1 202 574
- GB-A- 2 164 617

## Beschreibung

Die Erfindung betrifft einen Außenspiegel für ein Fahrzeug mit einem Spiegelgehäuse, in welchem ein Spiegel befestigt ist und das an einem Spiegelfuß in einer Gebrauchslage gehalten und relativ zum Spiegelfuß nach vorne und hinten abklappbar ist, wobei sich ein am Spiegelfuß befestigtes Halteorgan in das Spiegelgehäuse erstreckt und der Spiegelfuß wenigstens einen Teil aufweist, der bei an einer Fahrzeugkarosserie befestigtem Spiegelfuß aus der Fahrzeugkarosserie vorsteht.

Ausgehend von dem in der deutschen Gebrauchsmusterschrift DE-U-77 29 371 beschriebenen Außenspiegel liegt der Erfindung die Aufgabe zugrunde, den Herstellungsaufwand für den Außenspiegel wesentlich herabzusetzen. Dabei muß jedoch sichergestellt bleiben, daß der Außenspiegel in seiner Gebrauchslage erschütterungsfrei am Spiegelfuß gehalten bleibt und andererseits in Erfüllung der Sicherheitsauflagen das Spiegelgehäuse relativ zum Spiegelfuß nach vorne und hinten einem Stoß entsprechend ausweichen kann, also abklappbar sein muß. Dabei muß das abgeklappte Spiegelgehäuse mit dem Spiegelfuß derart verbunden bleiben, daß es wieder in die Gebrauchslage zurückgeführt werden kann.

Zur Lösung dieser Aufgabe sieht die Erfindung vor, daß das Spiegelgehäuse in Gebrauchslage den aus der Fahrzeugkarosserie vorstehenden Teil des Spiegelfusses seitlich vollständig umschließt und der spiegelfußseitige Rand des Spiegelgehäuses drucklos gegen die Fahrzeugkarosserie anliegt, wobei innere Anlageflächen des Spielgelgehäuses gegen entsprechende Sitze am Spiegelfuß anliegen. Dadurch kann der aus der Fahrzeugkarosserie vorstehende Spiegelfußteil wesentlich kleiner gehalten werden, wobei insbesondere die bisher übliche seitliche Abdeckung des Spiegelfusses, die für einen fließenden Übergang von der Außenkontour des Spiegelgehäuses in die Kontour der Fahrzeugkarosserie sorgte, ersatzlos entfallen kann.

Nach einem anderen Lösungsgedanken der gestellten Aufgabe, der mit besonderem Vorteil mit den vorstehend genannten Merkmalen des Außenspiegels kombinert werden kann, ist erfindungsgemäß vorgesehen, daß das Halteorgan wenigstens ein flexibles langgestrecktes und flaches Band aufweist, welches an einem Ende am Spiegelfuß verankert ist und sich durch einen Schlitz in einem spiegelfußseitigen Innenteil des Spiegelgehäuses, das dazu beispielsweise eine Querwand aufweisen kann, in das Spiegelgehäuse erstreckt, wobei der Schlitz in der Gebrauchslage des Spiegelgehäuses sich vertikal erstreckt. Unter Verzicht auf die bisher bei Außenspiegeln vielfach eingesetzten Zugfedern kann das Spiegelgehäuse dadurch beispielsweise durch eine Rastverbindung gemäß der erwähnten Gebrauchsmusterschrift in Gebrauchslage am Spiegelfuß gehalten werden, wobei die Schlitzführung des Spiegelgehäuses am Band beim Abklappen dessen Abfallen und Abkippen vom Spiegelfuß zuverlässig verhindert. Das Spiegelgehäuse kann aus einer abgeklappten Stellung von Hand wieder durch Einrasten am Spiegelfuß in der Gebrauchslage befestigt werden.

In Weiterbildung der Erfindung empfiehlt es sich, zwischen den spiegelfußseitigen Rand des Spiegelgehäuses und die Fahrzeugkarosserie einen elastischen Dichtungsstreifen zwischenzulegen, der das Innere des Spiegelgehäuses und einen gegebenenfalls vorgesehenen, den Spiegelfuß durchdringenden Verstellmechanismus für den Spiegel gegen Feuchtigkeit, Wasser und Schmutz abdichtet.

In bevorzugter Ausgestaltung der Erfindung ist weiterhin vorgesehen, daß beim Abklappen nach vorne oder hinten jeweils ein spiegelfußseitiger Randabschnitt des Spiegelgehäuses sich auf jeweils einer vorspringenden Schulter des Spiegelfußteils abstützt.

Das Band besteht zweckmäßig aus Federstahl, der für eine Rückkehr des abgeklappten Spiegelgehäuses wenigstens in die Nähe der Gebrauchslage sorgt. Ferner kann das Band am freien Ende seitlich umgebogen sein, so daß es in jeder der Endlagen des abgeklappten Spiegelgehäuses den Schlitz hintergreift und damit die beiden Endlagen definert.

Die Führung des Spiegelgehäuses während der Abklappbewegung wird in Weiterbildung der Erfindung verbessert, wenn das Halteorgan zwei übereinander angeordnete, gleichartige Bänder aufweist, die zweckmäßig vertikal beabstandet sein können.

Die Kombination der beiden jeweils für sich zur Lösung der Aufgabe beitragenden Erfindungsgedanken wird in besonders vorteilhafterweise etwa dadurch ermöglicht, daß etwa in der Mitte des Spiegelfußes zwei übereinander angeordnete Halteelemente ausgebildet sind, wobei aus einer spiegelfußseitigen Querwand des Spiegelgehäuses elastische Klauen vorstehen, welche die Halteelemente in Gebrauchslage des Spiegelgehäuses ergreifen.

Während das spiegelfußseitige Ende des Bandes oder der Bänder grundsätzlich neben den Halteelementen im Spiegelfuß verankert sein kann, sieht eine besonders zweckmäßige Ausgestaltung der Erfindung vor, daß der Schlitz in wenigstens einer der Klauen ausgebildet ist und daß das der Klaue zugeordnete Halteelement ebenfalls geschlitzt ist, wobei das spiegelfußseitige Ende des Bandes in dem geschlitzten Halteelement verankert ist. Für das manuelle Befestigen des abgeklappten Spiegelgehäuses am Spiegelfuß ergibt sich mit dieser Ausführungsform eine unmittelbar auf das geschlitzte Halteelement hinführende Führung für das Spiegelgehäuse.

Die Halteelemente besitzen zweckmäßig eine zylindrische Außenkontour, die von den Klauen umgriffen ist, so daß dem Band zur Verbesserung seiner Führungsfunktion hinreichende Breite gegeben werden kann. Mit Vorteil sind in dem Schlitz zwei gegenüberliegende Gleitstücke vorgesehen, die an je einer Seite des Bandes anliegen. Wenn der Schlitz, wie erwähnt, in den Klauen ausgebildet ist, sorgt deren Elastizität dafür, daß die Gleitstücke beim Abklappen des Spiegelgehäuses gegen die Seitenflächen des Bandes angedrückt werden, so daß eine hinreichende Bremse gegen ein freies Pendeln des abgeklappten Spiegelgehäuses geschaffen ist. Diese Bremswirkung wie auch die Haltekraft der Klauen werden noch verbessert, wenn die gegenüberliegenden Finger jeder Klaue von einer Drahtfeder umgriffen sind.

Die Erfindung wird nachstehend an einem in der beigefügten Zeichnung dargestellten Ausführungsbeispiel im einzelnen erläutert. Es zeigen:
- Figur 1:: eine Ansicht eines Außenspiegels von hinten;
- Figur 2:: eine Ansicht des Außenspiegels nach Figur 1 von schräg vorne; und
- Figur 3:: eine schematische Schnittdarstellung durch den Außenspiegel nach Figur 1 ungefähr längs der Linie A-A, wobei das nach vorne und hinten abgeklappte Spiegelgehäuse strichpunktiert angedeutet ist.

Der erläuterte Außenspiegel ist zur Verwendung an einem Personenwagen geeignet, an welchem er zum Einbau im vorderen Fensterdreieck der Fahrertür vorgesehen ist.

Der Außenspiegel besteht aus einem Spiegelgehäuse 1 und einem Spiegelfuß 2, an welchem das Spiegelgehäuse 1 mittels zweier übereinander angeordneter Rastverbindungen 3, 4 in Gebrauchslage gehalten ist. Durch den Spiegelfuß 2 erstreckt sich ein im Ganzen mit 5 bezeichneter Verstellmechanismus, der im Inneren des Spiegelgehäuses 1 mit der Rückseite eines Spiegels 6 gekoppelt ist und vom Inneren des Fahrzeugs aus mittels eines Handhebels 7 zur Verstellung des Spiegels in üblicher Weise betätigt werden kann.

Der Spiegel 6 ist auf eine Gelenkkugel um zwei zueinander senkrechte, im wesentlichen horizontale Achsen verschwenkbar aufgeklemmt. Die Gelenkkugel 8 ist auf Pfosten 9 aufgesetzt, welche aus der Innenseite der vorderen Spiegelgehäusewand 10 vorstehen. Der auf diese Weise am Spiegelgehäuse 1 befestigte Spiegel 6 ist in üblicher Weise von einem rückwärtigen Randwulst 11 des Spiegelgehäuses 1 mit geringem Abstand umgeben.

Zwischen dem spiegelfußnahen Teil 12 des Randwulstes 11 und einer gegenüberliegenden Partie der vorderen Spiegelgehäusewand 10 erstreckt sich eine Querwand 13 im Spiegelgehäuse, welche eine übliche Öffnung 14 zur Durchführung des Verstellmechanismus 5 aufweist.

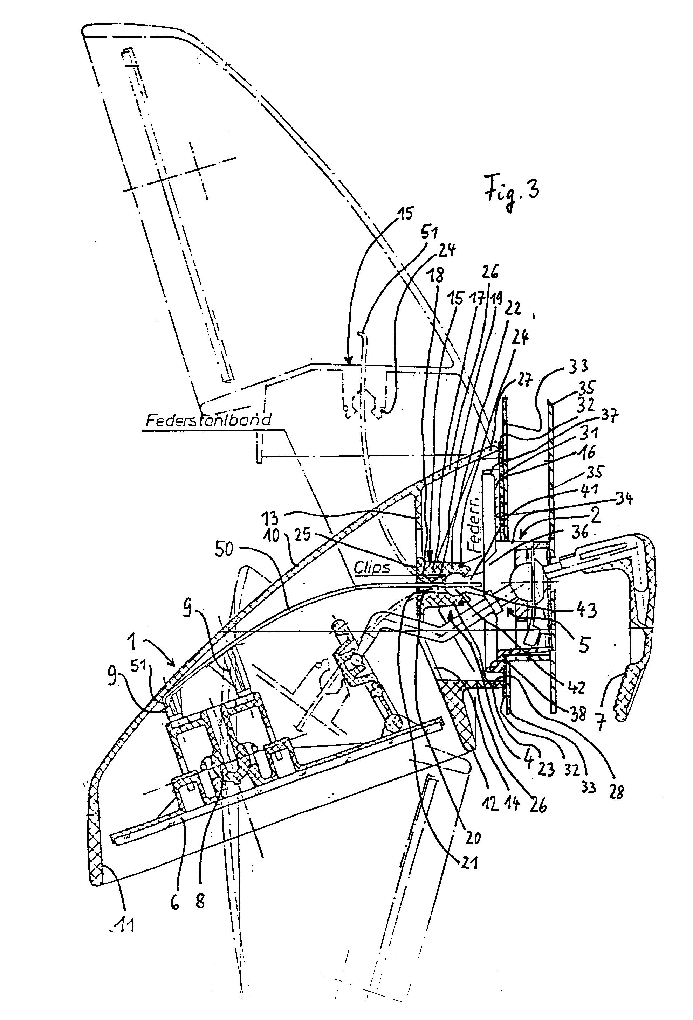

Zu der in Figur 3 im Querschnitt dargestellten unteren Rastverbindung 4 gehört eine an die Querwand 13 angeformte oder mit ihr verbundene Klaue 15, deren Öffnung auf den gegenüberliegenden Teil 16 des Spiegelfusses zuweist. Die Klaue 15 besitzt einen massiven Rumpf 17, durch den sich ein Schlitz 18 erstreckt, welcher in Gebrauchslage sich quer zum Teil 16 des Spiegelfusses 2 erstreckt. Im Inneren des Schlitzes 18 sind an der vorderen und hinteren Wand je ein Gleitstück 19, 20 befestigt, wobei de Gleitstücke 19, 20 zwischen sich einen weiteren Schlitz 21 freilassen, der noch weiter unten erläutert wird. Die Klaue 15 läuft zum Teil 16 hin in zwei gegenüberliegende Finger 22, 23 aus, welche eine zylindrische Ausnehmung mit vertikaler Achse der Klaue 15 weitgehend umschließen. Die Außenseite der Finger 22, 23 sind mit einer Ringnut versehen, in welcher eine Ringfeder 24 gehalten ist.

Die nicht dargestellte Klaue der Rastverbindung 3 befindet sich fluchtend oberhalb der Klaue 15 und ist wie diese gestaltet.

Der Spiegelfuß 2 besteht aus dem bereits erwähnten, im wesentlichen plattenförmigen Teil 16, welches nach Anbau des Außenspiegels an die Fahrzeugkarosserie außerhalb derselben verbleibt und mit einer rückwärtigen Fläche 31 über einen zwischengelegten Dichtungsstreifen 32 auf etwa dem äußeren Türblech 33 der Fahrertür aufliegt. Der Spiegelfuß 2 weist ferner ein inneres Teil 34 auf, das mit dem Teil 16 verbunden ist und bei angebautem Außenspiegel zwischen äußerem Türblech 33 und innerem Türblech 35 gehalten und dazu bestimmt ist, eine Gelenkkugel des Verstellmechanismus 5 zu beherbergen. Es versteht sich, daß das Teil 16 und das innere Teil 34 die erforderlichen Öffnungen und Durchbrüche für den Verstellmechanismus besitzen. Aus einem verdickten Steg 36, der aus der Innenfläche des Teils 16 in Richtung auf die Querwand vorsteht, erheben sich gegenüber der Klaue 15 sowie der entsprechenden Klaue der Rastverbindung 3 je ein Halteelement 41, das sich nach außen zunächst verjüngt und in einem zylindrisch geformten Kopf 42 endet. Der Kopf 42 ist auf dem Steg 36 derart plaziert, daß er von den Fingern 22, 23 um- und hintergriffen werden kann, wie Figur 3 zeigt.

In den Kopf 42 ist von seinem äußeren Ende her ein vertikaler Schlitz 43 eingeschnitten, der tief in das Halteelement 41 eindringt. In dem vertikalen Schlitz 43 ist das spiegelfußseitige Ende eines Federstahlbandes 50 dauerhaft verankert. Das Federstahlband 50 tritt daher aus dem vertikalen Schlitz 43 hervor, durchdringt den Schlitz 21 zwischen den Gleitstücken 19 und 20, und durchdringt damit gleichzeitig die Querwand 13, und erstreckt sich in Gebrauchslage in das Spiegelgehäuse 1 frei bis in den Bereich der Pfosten 9. Am spiegelfußfernen Ende 51 ist das Federstahlband seitlich abgebogen. Nicht dargestellt sind Führungselemente für das Federstahlband im Inneren des Spiegelgehäuses 1 hinter der Querwand 13, welche eine freie seitliche Beweglichkeit des Federstahlbandes 50 in dem Spiegelgehäuse 1 eingrenzen. Die Breite des Federstahlbands 50 quer zur Schnittebene der Figur 3 ist so gewählt, daß das Federstahlband 50 den vertikalen Schlitz 43 und den Schlitz 21 im wesentlichen ausfüllt. Die lichte Weite des Schlitzes 21 ist so gewählt, daß die Gleitstücke 19, 20 auf den gegenüberliegenden Seitenflächen des Federstahlbandes 50 anliegen.

Hervorzuheben ist, daß das Spiegelgehäuse 1 zum Spiegelfuß 2 hin in einem umlaufenden Rand 26 endet, welcher über den erwähnten Dichtungsstreifen 32 drucklos an dem äußeren Türblech 33 anliegt. Die Drucklosigkeit der Anlage ergibt sich daraus, daß das Spiegelgehäuse 1 am Spiegelfuß 2 lediglich über die Rastverbindungen 3, 4 gehalten ist und somit keiner auf das Türblech 33 gerichteten Federkraft unterliegt. Hervorzuheben ist weiter, daß die seitliche Ausdehnung des Teils 16 des Spiegelfusses 2 kleiner ist als die Fläche, die vom Rand 26 umschlossen ist. In Figur 3 ist deutlich zu erkennen, daß die horizontale Ausdehnung des Teils 16 kleiner ist als der Abstand zwischen dem vorderen Randabschnitt 27 und dem hinteren Randabschnitt 28 des Spiegelgehäuses 1. Daher ist der Spiegelfuß 2 in Gebrauchslage des Spiegelgehäuses 1 von diesem vollständig abgedeckt.

Wenn auf das Spiegelgehäuse 1 eine nach vorne gerichtete Kraft oder ein Stoß von hinten einwirkt, können sich die Rastverbindungen 3,4 lösen, indem die Finger 22, 23 aufgrund ihrer radialen Elastizität gegen die Wirkung der Ringfeder 24 von dem formschlüssigen Ergreifen des Kopfes 42 freikommen, so daß das Spiegelgehäuse 1 um das ballig gestaltete vordere Ende des vorderen Randabschnitts 27 nach vorne wie in Fig. 3 gestrichelt dargestellt abschwenken kann. Bei dieser Abschwenkbewegung gleiten die Gleitstücke 19, 20, die aufgrund der allgemeinen Elastizität der Klaue 15, unterstützt durch die Ringfeder 24, gegen die gegenüberliegenden Seitenflächen des Stahlbandes 50 gedrückt werden, auf diesen entlang in Richtung auf dessen Ende zu. Das Federstahlband 50 folgt aufgrund seiner Flexibilität der Drehbewegung des Spiegelgehäuses 1, bis das Ende 51 gegen die Rückseite 25 der Klaue 15 anliegt und dadurch eine weitere Schwenkbewegung des Spiegelgehäuses 1 nach vorne beendet. Da das Federstahlband 50 nicht nur flexibel sondern auch elastisch ist, kehrt das Spiegelgehäuse 1 nach Beendigung der Kraft- oder Stoßeinwirkung vom Federstahlband 50 angetrieben wieder in eine Stellung zurück, die der Gebrauchslage des Spiegelgehäuses 1 nahe ist. Das Spiegelgehäuse 1 muß dann lediglich von Hand auf die Fahrzeugkarosserie derart gedrückt werden, daß die Rastverbindungen 3, 4 wieder einrasten, d.h. die Finger 22, 23 den Kopf 42 wieder zwischen sich aufnehmen. Da das Stahlband 50 aufgrund seiner Einspannung im Kopf 42 keine Bewegungsfreiheit nach oben oder unten hat, verhindert es, daß das Spiegelgehäuse 1 beim Abklappen gegenüber seiner Gebrauchslage nach oben oder unten ausweicht, da der Schlitz 21 eine derartige Ausweichbewegung verhindert.

Beim Abklappen nach vorne rollt das vordere Ende des Randabschnitts 27 zunächst auf dem Dichtungsstreifen 32 ab und stützt sich im weiteren Verlauf der Abklappbewegung auf einer Schulter 37 des Teils 16 ab, welche aus dem plattenförmigen Teil 16 nach außen vorsteht.

Das Spiegelgehäuse 1 kann auch einem Stoß durch Abklappen nach hinten ausweichen, der von vorne auf das Spiegelgehäuse 1 einwirkt. Dabei lösen sich ähnlich wie bei der Abklappbewegung nach vorne die Rastverbindungen 3, 4, und das Ende des hinteren Randabschnitts 28 rollt auf dem Dichtungsstreifen 32 ab bzw. stützt sich an einer hinteren Schulter 38 ab, die aus dem Teil 16 ähnlich wie die vordere Schulter 37 nach außen vorsteht. Es versteht sich, daß vermöge des im wesentlichen geradlinigen hinteren Randabschnitt 28 es genügt, wenn der hintere Randabschnitt 28 lediglich an seinen beiden Enden auf dem Dichtungsstreifen 32 abrollt bzw. sich an der hinteren Schulter 38 abstützt, wobei der zwischenliegende Teil des hinteren Randabschnitts aus der Anlage an den Dichtungsstreifen 32 freikommt. Die hintere Endlage der Abklappbewegung des Spiegelgehäuses 1 nach hinten ist wieder durch Hintergreifen des Endes 51 des Federstahlbandes 50 hinter die Rückseite 25 der Klaue 15 definiert.

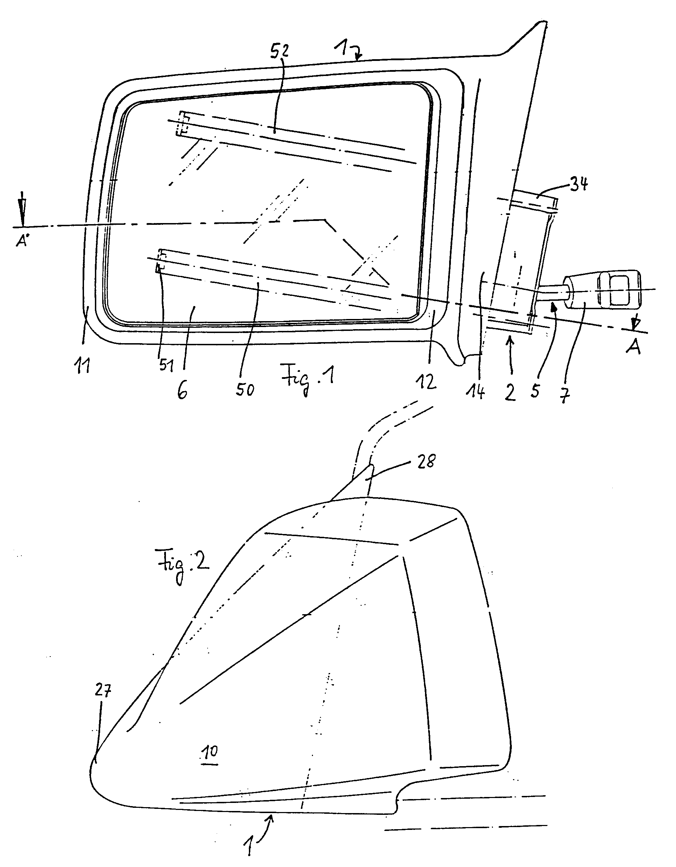

Wie Fig. 1 andeutet, ist in dem Halteelement jeder der beiden Rastverbindungen 3, 4 je ein Federstahlband dauerhaft verankert, so daß das untere Federstahlband 50 und das obere Federstahlband 52 vertikal übereinander liegen und einen den Halteelementen der Rastverbindungen 3, 4 entsprechenden Abstand besitzen, im übrigen jedoch im wesentlichen parallel zueinander verlaufen.

In der vorstehenden Beschreibung ist die Angabe "vorne" gleich bedeutend mit in Fahrtrichtung des Fahrzeugs weisend, wenn der Rückspiegel an dem Fahrzeug befestigt ist.

## Patentansprüche

1. Außenspiegel für ein Fahrzeug mit einem Spiegelgehäuse (1), in welchem ein Spiegel (6) befestigt ist und das an einem Spiegelfuß (2) in einer Gebrauchslage gehalten und relativ zum Spiegelfuß nach vorne und hinten abklappbar ist, wobei sich ein am Spiegelfuß (2) befestigtes Halteorgan in Form einer Zugfeder in das Spiegelgehäuse (1) erstreckt und der Spiegelfuß wenigstens einen Teil (16) aufweist, der bei an einer Fahrzeugkarosserie (33, 34) befestigtem Spiegelfuß (2) aus der Fahrzeugkarosserie vorsteht, dadurch gekennzeichnet, daß das Spiegelgehäuse (1) in Gebrauchslage den Teil (16) des Spiegelfußes (2) seitlich vollständig umschließt, wobei der spiegelfußseitige Rand (26) des Spiegelgehäuses (1) drucklos gegen die Fahrzeugkarosserie (33) anliegt, und wobei innere Anlageflächen des Spiegelgehäuses (1) gegen entsprechende Sitze am Spiegelfuß (2) anliegen.

2. Außenspiegel für ein Fahrzeug mit einem Spiegelgehäuse (1), in welchem ein Spiegel (6) befestigt ist und das an einem Spiegelfuß (2) in einer Gebrauchslage gehalten und relativ zum Spiegelfuß nach vorne und hinten abklappbar ist, wobei sich ein am Spiegelfuß befestigtes Halteorgan (50, 52) in das Spiegelgehäuse erstreckt und der Spiegelfuß wenigstens einen Teil (16) aufweist, der bei an einer Fahrzeugkarosserie (33, 34) befestigtem Spiegelfuß aus der Fahrzeugkarosserie vorsteht, dadurch gekennzeichnet, daß das Halteorgan (50,52) wenigstens ein flexibles Band aufweist, welches an einem Ende am Spiegelfuß (2) verankert ist und sich durch einen Schlitz (21) in einem spiegelfußseitigen Innenteil (13) des Spiegelgehäuses (1) erstreckt, wobei der Schlitz in der Gebrauchslage des Spiegelgehäuses sich vertikal erstreckt.

3. Außenspiegel nach Anspruch 1 oder 2, dadurch gekennzeichnet, daß zwischen dem spiegelfußseitigen Rand (26) des Spiegelgehäuses (1) und die Fahrzeugkarosserie (33) ein elastischer Dichtungsstreifen (32) zwischengelegt ist.

4. Außenspiegel nach einem der vorstehenden Ansprüche, dadurch gekennzeichnet, daß beim Abklappen nach vorne oder hinten jeweils ein spiegelfußseitiger Randabschnitt (27; 28) des Spiegelgehäuses (1) sich auf jeweils einer vorspringenden Schulter (37; 38) des Spiegelfußes (16) abstützt.

5. Außenspiegel nach Anspruch 4, dadurch gekennzeichnet, daß das Band aus Federstahl besteht.

6. Außenspiegel nach Anspruch 4 oder 5, dadurch gekennzeichnet, daß das Band am freien Ende (51) seitlich umgebogen ist, welches in jeder der Endlagen des abgeklappten Spiegelgehäuses (1) den Schlitz (21) hintergreift.

7. Außenspiegel nach einem der Ansprüche 4 bis 6, dadurch gekennzeichnet, daß das Halteorgan zwei übereinander angeordnete, gleichartige Bänder (50; 52) aufweist.

8. Außenspiegel nach Anspruch 7, dadurch gekennzeichnet, daß die Bänder vertikal beabstandet sind.

9. Außenspiegel nach einem der Ansprüche 4 bis 8, dadurch gekennzeichnet daß, aus dem Spiegelfuß (2) wenigstens ein paar übereinander angeordneter, runder Halteelemente (41) zum Spiegelgehäuse (1) hin vorstehen, die von jeweils einer am Spiegelgehäuse ausgebildeten elastischen Klaue (15) in Gebrauchslage des Spiegelgehäuses umgriffen sind, wobei etwa in der Mitte des Spiegelfusses (2) zwei übereinander angeordnete Halteelemente (41) ausgebildet sind, und die Klauen (15) aus dem Innenteil (13) vorstehen.

10. Außenspiegel nach einem der Ansprüche 4 bis 9, dadurch gekennzeichnet, daß der Schlitz (21) in wenigstens einer der Klauen (15) ausgebildet ist und daß das der Klaue zugeordnete Halteelement (41) geschlitzt ist, wobei das spiegelfußseitige Ende des Bandes (50) in dem geschlitzten Halteelement verankert ist.

11. Außenspiegel nach Anspruch 10, dadurch gekennzeichnet, daß die Halteelemente eine zylindrische Außenkontour (42) haben, die von den Klauen umgriffen ist.

12. Außenspiegel nach einem der Ansprüche 4 bis 11, dadurch gekennzeichnet, daß in dem Schlitz zwei gegenüberliegende Gleitstücke (19, 20) vorgesehen sind, die an je einer Seite des Bandes (50) anliegen.

13. Außenspiegel nach einem der Ansprüche 9 bis 12, dadurch gekennzeichnet, daß die gegenüberliegenden Finger (22, 23) jeder Klaue (15) von einer Drahtfeder (24) umgriffen sind.

## Claims

1. An outside mirror for a vehicle, the mirror having a mirror casing (1) in which a mirror (6) is mounted and which is retained in an operative position on a mirror foot (2) and is hingeable forwardly and rearwardly relative thereto, a retaining element in the form of a tension spring, such element being secured to the mirror foot (2), extending into the mirror casing (1), the mirror foot (2) having at least one part (16) which, with the mirror foot (2) secured to vehicle bodywork (33, 34), projects therefrom, characterised in that when in the operative position the mirror casing (1) completely extends laterally around the mirror foot part (16), the mirror casing edge (26) adjacent the mirror foot (2) engaging the vehicle bodywork (33) without pressure, inner engagement surfaces of the mirror casing (1) engaging companion seats on the mirror foot (2).

2. An outside mirror for a vehicle, the mirror having a mirror casing (1) in which a mirror (6) is mounted and which is retained in an operative position on a mirror foot (2) and is hingeable forwardly and rearwardly relative thereto, a retaining element (50, 52) which is secured to the mirror foot (2) extending into the mirror casing (1), the mirror foot (2) having at least one part (16) which, with the mirror foot (2) secured to vehicle bodywork (33, 34), projects therefrom, characterised in that the retaining element (50, 52) has at least one flexible strip which is attached at one end to the mirror foot (2) and extends through a slot (21) into an inside part (13) of the mirror casing (1), the inside part (13) being near the mirror foot (2), the slot (21) extending vertically when the mirror casing (1) is in the operative position.

3. An outside mirror according to claim 1 or 2, characterised in that a resilient sealing strip (32) is interposed between the vehicle bodywork (33) and the mirror casing edge (26) which is near the mirror foot (2).

4. An outside mirror according to any of the preceding claims, characterised in that during forwards or rearwards hinging a mirror casing edge part (27; 28) adjacent the mirror foot (2) bears on a projecting shoulder (37; 38) of the mirror foot (16).

5. An outside mirror according to claim 4, characterised in that the strip is made of spring steel.

6. An outside mirror according to claim 4 or 5, characterised in that the strip is bent round laterally at its free end (51) which engages behind the slot (21) in each of the end positions of the hinged-away mirror casing (1).

7. An outside mirror according to any of claims 4 to 6, characterised in that the retaining element has two similar strips (50; 52) disposed one above another.

8. An outside mirror according to claim 7, characterised in that the strips are spaced apart vertically.

9. An outside mirror according to any of claims 4 to 8, characterised in that at least one pair of circular retaining elements (41) arranged one above another project from the mirror foot (2) towards the mirror casing (1) and each have extending around them, when the mirror casing is in its operative position, a resilient claw (15) on the mirror casing, two retaining elements (41) being arranged one above another substantially at the centre of the mirror foot (2); the claws (15) projecting from the inner part (13).

10. An outside mirror according to any of claims 4 to 9, characterised in that the slot (21) is present in at least one of the claws (15) and the retaining element (41) associated with the claw is slotted, that end of the strip (50) which is near the mirror foot (2) being secured in the slotted retaining element (41).

11. An outside mirror according to claim 10, characterised in that the retaining elements have a cylindrical outside contour (42) around which the claws engage.

12. An outside mirror according to any of claims 4 to 11, characterised in that two opposite sliding elements (19, 20) each engaging one side of the strip (50) are disposed in the slot (21).

13. An outside mirror according to any of claims 9 to 12, characterised in that a wire spring (24) extends around the opposite fingers (22, 23) of each claw (15).

## Revendications

1. Rétroviseur extérieur pour un véhicule avec un corps de rétroviseur (1), dans lequel un rétroviseur (6) est fixé et qui est maintenu sur un support de rétroviseur (2) dans une position d'utilisation et rabattable en avant et en arrière relativement au support de rétroviseur, où un organe d'arrêt en forme de ressort de traction fixé sur le support de rétroviseur (2) s'étend dans le corps de rétroviseur (1) et le support de rétroviseur présente au moins une partie (16) qui, avec un support de rétroviseur (2) fixé sur une carrosserie de véhicule (33, 34), dépasse de la carrosserie du véhicule, caractérisé en ce que le corps de rétroviseur (1) en position d'utilisation entoure latéralement complètement la partie (16) du support de rétroviseur (2), où le bord (26) côté support de rétroviseur du corps de rétroviseur (1) s'appuie sans pression contre la carrosserie du véhicule (33), et où les surfaces d'appui intérieures du corps de rétroviseur (1) s'appuient contre des sièges correspondants sur le support de rétroviseur (2).

2. Rétroviseur extérieur pour un véhicule avec un corps de rétroviseur (1), dans lequel un rétroviseur (6) est fixé et qui est maintenu sur un support de rétroviseur (2) dans une position d'utilisation et rabattable en avant et en arrière relativement au support de rétroviseur, où un organe d'arrêt (50, 52) fixé sur le support de rétroviseur s'étend dans le corps de rétroviseur et le support de rétroviseur présente au moins une partie (16) qui, avec un support de rétroviseur fixé sur une carrosserie de véhicule (33, 34), dépasse de la carrosserie du véhicule, caractérisé en ce que l'organe d'arrêt (50, 52) présente au moins une bande flexible qui à une extrémité est ancrée sur le support de rétroviseur (2) et s'étend par une fente (21) dans une partie intérieure (13) côté support du rétroviseur du corps du rétroviseur (1), où la fente s'étend verticalement dans la position d'utilisation du corps du rétroviseur.

3. Rétroviseur extérieur selon la revendication 1 ou 2, caractérisé en ce que, entre le bord (26) côté support du rétroviseur du corps du rétroviseur (1) et la carrosserie du véhicule (33), une bande d'étanchéité élastique (32) est posée.

4. Rétroviseur extérieur selon l'une des revendications précédentes, caractérisé en ce que, lors du rabattement en avant ou en arrière, une section du bord (27;28) côté support du rétroviseur du corps du rétroviseur (1) s'appuie sur un épaulement saillant (37;38) du support du rétroviseur (16).

5. Rétroviseur extérieur selon la revendication 4, caractérisé en ce que la bande est constituée d'acier à ressort.

6. Rétroviseur extérieur selon la revendication 4 ou 5, caractérisé en ce que la bande est recourbée latéralement à l'extrémité libre (51) qui, dans chacune des positions finales du support de rétroviseur (1) rabattu, saisit la fente (21) à l'arrière.

7. Rétroviseur extérieur selon l'une des revendications 4 à 6, caractérisé en ce que l'organe d'arrêt présente deux bandes (50;52) de même type, disposées l'une sur l'autre.

8. Rétroviseur extérieur selon la revendication 7, caractérisé en ce que les bandes sont écartées verticalement.

9. Rétroviseur extérieur selon l'une des revendications 4 à 8, caractérisé en ce que du support de rétroviseur (2) au moins une paire d'éléments d'arrêt (41) ronds, disposés l'un sur l'autre, dépassent du corps de rétroviseur (1), qui sont entourés chacun, en position d'utilisation du corps de rétroviseur, par une griffe (15) élastique formée sur le corps de rétroviseur, où approximativement au milieu du support de rétroviseur (2) deux éléments d'arrêt (41) disposés l'un sur l'autre sont formés, et les griffes (15) dépassent de la partie intérieure (13).

10. Rétroviseur extérieur selon l'une des revendications 4 à 9, caractérisé en ce que la fente (21) est formée dans au moins une des griffes (15) et que l'élément d'arrêt (41) attribué à la griffe est fendu, où l'extrémité côté support de rétroviseur de la bande (50) est ancrée dans l'élément d'arrêt fendu.

11. Rétroviseur extérieur selon la revendication 10, caractérisé en ce que les éléments d'arrêt ont un contour extérieur cylindrique (42) qui est entouré par les griffes.

12. Rétroviseur extérieur selon l'une des revendications 4 à 11, caractérisé en ce que dans la fente sont prévues deux pièces coulissantes (19, 20) opposées qui s'appuient chacune sur une face de la bande (50).

13. Rétroviseur extérieur selon l'une des revendications 9 à 12, caractérisé en ce que les doigts (22, 23) opposés de chaque griffe (15) sont entourés par un ressort à boudin (24).
